(19) Europäisches Patentamt
European Patent Office
Office européen des brevets

(11) **EP 3 414 030 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **17702332.2**

(22) Anmeldetag: **25.01.2017**

(51) Int Cl.:
**B21H 5/02** *(2006.01)* **B24B 39/04** *(2006.01)*
**B23F 19/00** *(2006.01)*

(86) Internationale Anmeldenummer:
**PCT/EP2017/051560**

(87) Internationale Veröffentlichungsnummer:
**WO 2017/137258 (17.08.2017 Gazette 2017/33)**

(54) **WALZVORRICHTUNG ZUM WALZEN VON WERKSTÜCKEN MIT VERZAHNUNG UND ZUGEHÖRIGES VERFAHREN**

ROLLING DEVICE FOR ROLLING WORK PIECES HAVING A TOOTHING, AND ASSOCIATED METHOD

DISPOSITIF DE GALETAGE DE PIÈCES MUNIES D'UNE DENTURE ET PROCÉDÉ AFFÉRENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2016 DE 102016102429**

(43) Veröffentlichungstag der Anmeldung:
**19.12.2018 Patentblatt 2018/51**

(73) Patentinhaber: **Ecoroll AG, Werkzeugtechnik**
**29227 Celle (DE)**

(72) Erfinder: **RÖTTGER, Karsten**
**29223 Celle (DE)**

(74) Vertreter: **Gramm, Lins & Partner**
**Patent- und Rechtsanwälte PartGmbB**
**Theodor-Heuss-Straße 1**
**38122 Braunschweig (DE)**

(56) Entgegenhaltungen:
| | |
|---|---|
| EP-A1- 0 616 863 | WO-A1-2007/128013 |
| DE-A1- 2 922 639 | DE-A1- 3 422 354 |
| JP-A- S5 441 253 | JP-A- H05 277 610 |
| JP-A- 2001 129 630 | |

EP 3 414 030 B1

**Beschreibung**

Die Erfindung betrifft eine Walzvorrichtung zum Walzen von Werkstücken mit einer Verzahnung und ein entsprechendes Walzverfahren. Bei der Herstellung von Werkstücken mit Verzahnung, beispielsweise von Zahnrädern, Zahnstangen oder Ähnlichem, stellt die Verzahnung in der Regel den schwächsten Teil des Bauteils dar. Es ist daher notwendig, die Verzahnung so auszubilden, dass sie möglichst hohe Lasten dauerhaft aufnehmen kann. Es ist bekannt, die Dauerfestigkeit von Verzahnungen durch das Einbringen von Druckeigenspannungen zu erhöhen. Dazu werden beispielsweise die Zahngründe, also die Bereiche kleinsten Durchmessers eines verzahnten Werkstücks, kugelgestrahlt. Dieser Prozess ist jedoch aufwändig und führt zu wenig glatten Oberflächen.

Aus der DE 29 22 639 A1 ist eine Vorrichtung bekannt, die eine Formrolle aufweist, die zwischen zwei Zähne eines Zahnrads gepresst wird. Dadurch werden die beiden einander zugewandten Zahnflanken der zwei Zähne verfestigt. Nachteilig an dieser Vorrichtung ist die geringe Produktivität.

Die DE 195 16 834 A1 beschreibt das Walzen mehrerer hintereinander angeordneter Turbinenschaufeln durch ein Werkzeug, bei dem eine hydrostatisch gelagerte Walzkugel den Grund einer Kerbe verdichtet. Ein entsprechendes Werkzeug hat ebenfalls eine vergleichsweise geringe Produktivität.

Die EP 0 163 922 B1 beschreibt eine Vorrichtung zur Bearbeitung eines Satzes an Zahnrädern durch hydrostatisches Pressen von Scheibenverformungselementen gegen die Zahnflanke. Nachteilig an dieser Vorrichtung ist, dass sie entweder nur geringe Druckeigenspannungen einbringen kann oder sehr hohe Flüssigkeitsdrücke aufbauen muss, was aufwändig ist.

Eine Vorrichtung zur Feinbearbeitung der Zahnflanken eines Zahnrades ist aus der DE 196 25 285 A1 bekannt. Das zu bearbeitende außenverzahnte Zahnrad wird mittels eines innenverzahnten Werkzeugs spanlos geglättet. Ein Einbringen von Druckeigenspannungen ist so nicht möglich.

Eine Rolliervorrichtung zum Einbringen von Druckeigenspannungen in eine zylinderförmige Außenfläche eines Bauteils beschreibt die DE 195 11 882 B4. Diese Vorrichtung ist für Zahnräder ungeeignet.

In der DE 34 22 354 A1 ist eine gattungsgemäße Walzvorrichtung beschrieben, bei der ein Werkzeug verwendet wird, das einen Walzkopf aufweist, an dem mehrere gleiche, planetenartig umlaufende Walzen gelagert sind. Die Zahnlücken werden mehrfach so überwalzt, dass aufeinanderfolgende Walzvorgänge sich überlappen. Nachteilig an einer solchen Walzvorrichtung ist, dass nur radial umlaufende Gewinde bearbeitet werden können. Zudem ist die maximal erreichbare Walzkraft vergleichsweise klein.

Der Erfindung liegt die Aufgabe zugrunde, die Herstellung von Werkstücken mit Verzahnungen zu verbessern.

Die Erfindung löst das Problem durch eine Walzvorrichtung mit den Merkmalen von Anspruch 1. Die Erfindung löst das Problem zudem durch ein Verfahren gemäß dem unabhängigen Verfahrensanspruch.

Vorteilhaft an der Erfindung ist, dass durch die Verwendung von zumindest zwei Umform-Werkzeugen das Werkstück schnell und zudem auf reproduzierbare Weise bearbeitet werden kann. Das ist besonders bei der Großserienfertigung, beispielweise von Zahnrädern, vorteilhaft.

Günstig ist zudem, dass die Umform-Werkzeuge als Walzen oder Rollen ausgebildet sein können, so dass zusätzlich zu dem Einbringen von Druckeigenspannungen eine glatte Oberfläche erreicht wird. Durch die Erfindung kann damit nicht nur die Verschleißfestigkeit, sondern auch die Oberflächenqualität der Werkstücke verbessert werden.

Im Rahmen der vorliegenden Beschreibung wird unter dem Walzen eine Bearbeitung verstanden, bei der sich der Eigenspannungszustand des Werkstücks ändert. Vorzugweise ändert sich durch das Walzen die Dicke, beispielsweise der jeweils bearbeiteten Region, nicht oder nur unwesentlich, insbesondere weniger als 1 Promille. In anderen Worten handelt es sich bei dem Walzen insbesondere um einen Vorgang zum Verändern der Randzoneneigenschaften, insbesondere der Kaltverfestigung und/oder der Eigenspannungen und/oder der Mikrotopographie wie der Rauheit oder der Rautiefe, nicht aber um ein Verfahren zum Verändern der Makrogeometrie.

Unter einem Umform-Werkzeug wird insbesondere ein Werkzeug verstanden, das ausgebildet ist zum Verändern des Eigenspannungszustands und/oder des Kaltverfestigungszustands und/oder der Mikrotopographie.

Unter dem Merkmal, dass die Führung ausgebildet ist zum geführten Bewegen der Umform-Werkzeuge relativ zu einem Werkstück wird insbesondere verstanden, dass die Führung so ausgebildet ist, dass eine geführte Relativbewegung zwischen den Umform-Werkzeugen und dem zumindest einen Werkstück ermöglicht wird. Eine geführte Bewegung ist eine Bewegung, bei der eine Abweichung von einem vorgegebenen Führungspfad nicht möglich ist. Eine Relativbewegung bedeutet, dass entweder die Umform-Werkzeuge sich auf einem vorgegebenen Pfad bewegen oder sich das zumindest eine Werkstück auf einem vorgegebenen Pfad bewegt oder dass sowohl die Umform-Werkzeuge als auch das zumindest eine Werkstück sich auf jeweils vorgegebenen Pfaden bewegen.

Die Führung kann insbesondere eine Vorrichtung sein, die ausgebildet ist zum Bewegen der Umform-Werkzeuge relativ zu einem, insbesondere feststehenden, zweiten Führungselement. Es ist möglich, nicht aber notwendig, dass alle Umform-Werkzeuge an einem ersten Führungselement befestigt sind. Möglich ist auch, dass Gruppen von Umform-Werkzeug, oder sogar jedes Umform-Werkzeug allein, an je einem ersten Führungselement befestigt ist, wobei mehrere solcher Führungselemente relativ zu einem gemeinsamen zweiten Führungselement geführt sind.

So ist es möglich und stellt eine Ausführungsform dar, dass alle Umform-Werkzeuge relativ zueinander bezüglich einer Linearbewegung unbeweglich sind und insbesondere starr miteinander gekoppelt sind. Es ist jedoch auch möglich, dass die Umform-Werkzeuge paarweise oder gruppenweise relativ zueinander beweglich sind. Beispielsweise können mehrere Umform-Werkzeuge einzeln oder gruppenweise an einem Schlitten befestigt sein, der sich unabhängig von zumindest einem weiteren Schlitten, an dem zumindest ein weiteres Umform-Werkzeug befestigt ist, bewegen kann.

Unter dem Walzen wird insbesondere ein Festwalzen oder Glattwalzen verstanden. Unter einem Festwalzen wird eine Bearbeitung der Oberfläche des Werkstücks verstanden, bei der sich die nachteiligen Zugeigenspannungen verringern, insbesondere bei dem Druckeigenspannungen in einen Bereich eingebracht werden, in dem vorher Zugeigenspannungen vorlagen und/oder bei der sich der Kaltverformungszustand der Randzone erhöht.

Unter dem Werkstück wird beispielsweise ein Zahnrad, insbesondere ein Stirnrad, ein Kegelrad, eine Vielkeilwelle oder eine Vielkeilnabe verstanden. Allgemein wird unter dem Werkstück mit Verzahnung insbesondere ein Werkstück verstanden, das im Einsatz über die Verzahnung eine Kraft oder ein Drehmoment überträgt.

Unter einer Verzahnung wird insbesondere eine Struktur verstanden, die äquidistant angeordnete Zähne aufweist. Die Zähne können insbesondere äquidistant bezüglich eines Winkels oder einer Strecke angeordnet sein. Besonders bevorzugt besitzt das Werkstück eine Außenverzahnung.

Die zweite Zahnflanke kann am gleichen Zahn, einem benachbarten Zahn oder einem weiteren, nicht benachbarten Zahn ausgebildet sein.

Unter einem Bereich wird ein Gebiet im Zahn-Querschnitt eines Zahns verstanden. Darunter, dass der zweite Bereich vom ersten Bereich verschieden ist, wird verstanden, dass ein Gebiet existiert, das zum zweiten Bereich gehört, nicht aber zum ersten und dass ein Gebiet existiert, das zum ersten Bereich gehört, nicht aber zum zweiten. Es ist möglich, nicht aber notwendig, dass ein Gebiet existiert, das sowohl zum ersten Bereich als auch zum zweiten Bereich gehört.

Unter dem Merkmal, dass die Umform-Werkzeuge so ausgebildet sind, dass die entsprechenden Bereiche umformbar sind, wird insbesondere verstanden, dass die Bereiche beim Einsatz der Walzvorrichtung umgeformt werden.

Das erste Umform-Werkzeug umfasst eine erste Rolle, die um eine erste Werkzeug-Drehachse drehbar gelagert ist, und das zweite Umform-Werkzeug ist eine zweite Rolle, die um eine zweite Werkzeug-Drehachse drehbar gelagert ist. Die Begriffe Rolle und Walze werden in der vorliegenden Beschreibung synonym verwendet. Günstig ist es, wenn die Rolle scheibenförmig ist, das heißt, dass ihr Radius größer ist als ihre maximale Dicke. Insbesondere ist der Radius zumindest dreifach, vorzugsweise zumindest fünffach, größer ist als die maximale Dicke. Die Dicke bezeichnet die Erstreckung in axialer Richtung.

Ein derartiges Umform-Werkzeug ist vorzugsweise so an der Führung befestigt, dass die Rolle im Einsatz zumindest in einem Punkt schlupffrei an dem Werkstück abrollt. Dieser Punkt bewegt sich in aller Regel auf dem Werkstück.

Alternativ oder zusätzlich kann zumindest eines der Umform-Werkzeuge ein Gleitelement aufweisen. Dieses Gleitelement ist vorzugsweise zumindest abschnittsweise konvex ausgebildet und ist insbesondere abschnittsweise zylinder- oder kugelförmig. Ein Gleitelement ist ein Element, dass so an der Führung befestigt ist, dass es im Betrieb an der Oberfläche des Werkstücks vorbeigleitet und die Randzone des Werkstücks dadurch glättet und/oder Druckeigenspannungen einbringt. Günstig ist es, wenn dieses Gleitelement mit einer Ultraschallquelle verbunden ist, die das Gleitelement auf das Werkstück zu und von ihm weg oszillieren lässt.

Vorzugsweise umfasst die Walzvorrichtung ein drittes Umform-Werkzeug, das insbesondere eine dritte Rolle aufweist, die um eine dritte Werkzeug-Drehachse drehbar gelagert ist, und ein viertes Umform-Werkzeug, das insbesondere eine vierten Rolle aufweist, die um eine vierte Werkzeug-Drehachse drehbar gelagert ist, wobei mit dem dritten Umform-Werkzeug ein dritter Bereich der Zahnflanke des Werkstücks umformbar ist, der sich vom zweiten und vom ersten Bereich unterscheidet, und wobei mit dem vierten Umform-Werkzeug ein vierter Bereich der Zahnflanke umformbar ist, der sich von den übrigen drei Bereichen unterscheidet. Günstig ist es, wenn zumindest zwei der Werkzeug-Drehachsen parallel zueinander verlaufen.

Unter dem Merkmal, dass zwei Werkzeug-Drehachsen parallel zueinander verlaufen, wird insbesondere verstanden, dass es möglich, nicht aber zwingend notwendig ist, dass die beiden Drehachsen im mathematischen Sinne parallel zueinander verlaufen. Vielmehr ist eine technische Parallelität gemeint, das heißt, dass kleine Abweichungen zwischen der strengen mathematischen Parallelität und der tatsächlichen Parallelität möglich ist. Insbesondere ist eine Abweichung von bis zu 1,5° tolerierbar.

Vorzugsweise umfasst die Walzvorrichtung eine Vielzahl an Umform-Werkzeugen, wobei zumindest die Mehrheit der Umform-Werkzeuge zum Umformen von jeweils voneinander verschiedenen Bereichen der Zahnflanke des Werkstücks, insbesondere des Zahnrades, angeordnet ist. Je mehr Umform-Werkzeuge vorhanden sind, desto breiter ist der Bereich des Werkstücks, der insgesamt bearbeitet werden kann. Korrespondierend dazu kann mit mehreren Umform-Werkzeugen die Randzone des Werkstücks intensiver bearbeitet werden.

Vorzugsweise sind die Umform-Werkzeuge so an der zumindest einen Führung befestigt, dass die Werkzeug-Drehachsen zumindest in der Mehrheit der gleichen Trajektorie folgen. In anderen Worten ist zumindest die Mehrheit der Werkzeugs-Drehachsen relativ zueinander starr mittels der Führung miteinander gekoppelt. Insbesondere weist die Führung für jedes Umform-Werkzeug ein Halteelement auf, das die jeweilige Drehachse hält. Diese Halteelemente sind dann starr miteinander verbunden, das heißt, dass sie sich relativ zueinander nicht bewegen können.

Unter der Trajektorie wird insbesondere diejenige Kurve im Raum verstanden, die das Werkzeug zurücklegt.

Das erste Umform-Werkzeug hat eine erste Rolle, die an ihrem Umfang eine erste wirksame axiale Dicke hat und das zweite Umform-Werkzeug besitzt eine zweite Rolle, die an ihrem Umfang eine zweite wirksame axiale Dicke hat, die sich von der ersten wirksamen axialen Dicke unterscheidet. Unter der axialen Dicke wird der Abstand zweier Punkte verstanden, die in Einsatz auf gegenüberliegenden Seiten gleichzeitig im Eingriff mit dem Werkstück sind. Wenn die Rolle des entsprechenden Umform-Werkzeugs an ihrem Umfang konvex ist, ist die wirksame axiale Dicke gleich der Dicke des Werkzeugs. Durch die unterschiedlichen wirksamen Dicken werden unterschiedliche Bereich der Zahnflanke bearbeitet.

Vorzugsweise besitzt die Walzvorrichtung eine Werkstückaufnahme, insbesondere eine Zahnradaufnahme, zum Aufnehmen eines ersten Werkstücks, insbesondere eines ersten Zahnrades, und zumindest eines zweiten Werkstücks, insbesondere eines zweiten Zahnrads, wobei die zumindest eine Führung zum Führen der Umform-Werkzeuge relativ zur Werkstückaufnahme ausgebildet ist. Insbesondere ist die Führung so ausgebildet, dass die Umform-Werkzeuge so an den Zahnflanken der Werkstücke vorbeigeführt werden, dass jeweils zwei gegenüberliegende Zahnflanken der Werkstücke bearbeitet werden. Es kann sich bei den gegenüberliegenden Zahnflanken um zwei Zahnflanken des gleichen Zahns oder benachbarter Zähne handeln.

Vorzugsweise ist die Führung zum Führen der Umform-Werkzeuge entlang einer gradlinigen Trajektorie ausgebildet. Unter anderen Worten handelt es sich bei der Führung um eine Linearführung.

Günstig ist es, wenn die Werkstückaufnahme eine Zahnradaufnahme ist und ausgebildet ist zum Aufnehmen von Zahnrädern unter ihrem Schrägungswinkel. Hierunter ist zu verstehen, dass Zahnräder, insbesondere schräg verzahnte Zahnräder, so auf der Zahnradaufnahme anordenbar sind, dass sich für jedes Zahnrad zumindest jeweils ein Zahn mit Zähnen anderer Zahnräder zu einer durchgehenden Rille ergänzt. Für geradeverzahnte Zahnräder beträgt der Schrägungswinkel 0°, sodass die Zahnräder einfach unverdreht zum jeweiligen Vorder-Zahnrad hintereinander angeordnet werden können. Die Rille verläuft dann linear. Bei schrägverzahnten Zahnrädern verläuft die Rille helikal.

Vorzugsweise besitzt die Walzvorrichtung eine Drehvorrichtung, insbesondere einen Drehantrieb, zum Drehen der Werkstücke und/oder der Zahnradaufnahme relativ zur Führung. Es ist dann möglich, die Umform-Werkzeuge linear zu bewegen, sodass sie in der Rille laufen. Es ist möglich, die Zahnräder nach jedem Durchlaufen der Umform-Werkzeuge durch eine Rille relativ zur Führung zu bewegen. Ein derartiges Verfahren ist besonders einfach durchzuführen und eine entsprechende Vorrichtung sehr einfach aufgebaut und dennoch effektiv. Es eignet sich besonders gut für geradverzahnte Zahnräder.

Alternativ oder zusätzlich kann die Drehvorrichtung eine Bremse und/oder einen Anschlag aufweisen. In diesem Fall kann die Zahnradaufnahme durch Aufbringen eines Drehmoments gedreht werden, beispielsweise mittels einem der Umformwerkzeuge, wobei die Drehvorrichtung die vom Drehmoment hervorgerufene Drehbewegung dann unterbricht, wenn die korrekte Winkelstellung erreicht ist.

Vorzugsweise verlaufen die Drehachsen der Umform-Werkzeuge unter einem von 90° verschiedenen Werkzeugwinkel zu der Trajektorie. Günstig ist es, wenn der Werkzeugwinkel dem Schrägungswinkel entspricht. Alternativ ist es aber auch möglich, dass der Werkzeugwinkel die Summe aus dem Schrägungswinkel und einem Verkantungswinkel ist, wobei der Verkantungswinkel vorzugsweise zwischen minus 2° und plus 2° beträgt.

Besonders günstig es in diesem Fall, wenn die Walzvorrichtung einen Drehantrieb aufweist, der zum kontinuierlichen Drehen der Werkstückaufnahme relativ zur Führung ausgebildet ist, wobei die Drehung der Werkstückaufnahme zur Bewegung der Umform-Werkzeuge so synchronisiert ist, dass die Umform-Werkzeuge (oder in anderen Worten die Rollen des jeweiligen Umform-Werkzeugs) in zumindest einer Rille laufen. Es ist dann möglich, schrägverzahnte Zahnräder zu bearbeiten, wenn die Führung eine Linearführung ist.

Vorzugsweise führt die Linearführung entlang der Längsachse der Werkstückaufnahme. Sind auf der Werkstückaufnahme Zahnräder aufgenommen, so ergänzen sich deren Zahnflanken vorzugsweise zu einer durchgehenden Rille, die unter dem Schrägungswinkel zur Längsachse verlaufen..

Vorzugsweise sind die Umform-Werkzeuge bezüglich der Trajektorie einspurig hintereinander angeordnet, das heißt, dass die Umform-Werkzeuge in der gleichen Rille laufen.

Vorzugsweise sind die Umform-Werkzeuge so an der Führung angebracht, dass zumindest zwei Umform-Werkzeuge simultan mit dem gleichen Werkstück in Eingriff bringbar sind. Insbesondere können die Umform-Werkzeuge so an der Führung angebracht sein, dass zumindest zwei nicht benachbarte Zähne des gleichen Werkstücks simultan bearbeitbar sind. Auf diese Weise wird die Bearbeitungszeit reduziert. Die Umform-Werkzeuge sind dann entlang eines Kreisbogens oder einer Helix an dem Führungselement befestigt.

Besonders bevorzugt sind die Umform-Werkzeuge so an der Führung angebracht, dass mehr als ein Umform-Werkzeug mit dem ersten Werkstück in Eingriff bringbar ist und simultan dazu mehr als ein Umform-Werkzeug mit einem zweiten Werkstück in Eingriff bringbar ist. Insbesondere können die Umform-Werkzeuge so an der Führung angebracht sein, dass zumindest ein Drittel, insbesondere mehr als die Hälfte aller Zähne simultan bearbeitet werden können.

Günstig ist es, wenn die Umform-Werkzeuge zum simultanen Walzen zwei gegenüberliegender Flanken benachbarter Zähne an der Führung befestigt sind. In diesem Fall müssen die Umform-Werkzeuge lediglich Rollen aufweisen, die o ausgebildet sind, dass sie zwischen zwei Zahnflanken passen, sodass sie durch eine Walzkraft, die das Umform-Werkzeug in den Zahnzwischenraum drückt, eine axiale Kraftkomponente entsteht, die die Zahnflanke umformt.

In seiner allgemeinsten Form löst die Erfindung das Problem durch eine Walzvorrichtung zum Walzen von Werkstücken mit Verzahnung, insbesondere Zahnrädern, mit (a) einem ersten Umform-Werkzeug, (b) zumindest einem zweiten Umform-Werkzeug und (c) zumindest einer Führung, an der die Umform-Werkzeuge befestigt sind und die ausgebildet ist zum geführten Bewegen der Umform-Werkzeuge, sodass mit dem ersten Umform-Werkzeug ein erster Bereich einer Zahnflanke des Werkstücks umformbar ist und mit dem zweiten Umform-Werkzeug ein zweiter Bereich der Zahnflanke, der vom ersten Bereich verschieden ist, und/oder ein zweiter Bereich einer zweiten Zahnflanke, umformbar ist, das heißt beim Einsatz der Walzvorrichtung umgeformt wird.

In seiner allgemeinsten Form löst die Erfindung das Problem zudem durch ein Verfahren zum Walzen von Zähnen eines Werkstücks, mit den Schritten (a) Anordnen des Werkstücks auf einer Werkstückaufnahme und gemeinsames geführtes Bewegen eines ersten Umform-Werkzeugs und zumindest eines zweiten Umform-Werkzeugs relativ zur Werkstückaufnahme, sodass mit dem ersten Umform-Werkzeug ein erster Bereich einer Zahnflanke des Werkstücks umgeformt wird und mit dem zweiten Umform-Werkzeug ein zweiter Bereich der Zahnflanke, der vom ersten Bereich verschieden ist, und/oder ein zweiter Bereich einer zweiten Zahnflanke, umgeformt wird. Die oben und im Folgenden genannten Merkmale und bevorzugten Ausführungsformen gelten sowohl für die Erfindung in ihrer allgemeinsten Form als auch in ihrer Form gemäß der unabhängigen Ansprüche.

Alternativ sind die Umform-Werkzeuge ausgebildet zum simultanen Walzen gegenüberliegender Zahnflanken des jeweils gleichen Zahns.

In einer weiteren Alternative sind die Umform-Werkzeuge so ausgebildet, dass gegenüberliegende Flanken benachbarter Zähne von zwei verschiedenen Umform-Werkzeugen umgeformt werden.

Es ist günstig, wenn die Umform-Werkzeuge angeordnet sind zum simultanen Aufbringen einer ersten Walzkraftkomponente, die auf eine erste Zahnflanke wirkt, und einer zweiten Walzkraftkomponente, die auf die gegenüberliegende Zahnflanke wirkt, wobei die erste Walzkraftkomponente betragsmäßig der zweiten Walzkraftkomponente entspricht. Die gegenüberliegende Zahnflanke kann am gleichen oder an einem benachbarten Zahn ausgebildet sein.

Unter dem Merkmal, dass die beiden Walzkraftkomponente einander entsprechen, wird insbesondere verstanden, dass es möglich, nicht aber notwendig ist, dass die beiden Walzkräfte betragsmäßig genau gleich groß sind. Es ist vielmehr auch möglich, dass sie sich um einen kleinen Betrag voneinander unterscheiden, beispielsweise um höchstens 15%, insbesondere höchstens 10%. Auf diese Weise wird eine symmetrische Bearbeitung der gegenüberliegenden Zahnflanken gewährleistet.

Günstig ist es in dem Fall zudem, wenn die Führung so relativ zur Werkstückaufnahme angeordnet ist, dass im Wesentlichen kein Drehmoment auf die Werkstücke entsteht.

Hierunter wird insbesondere verstanden, dass ein Drehmoment $|\vec{M}|$ entsteht, für dessen Betrag

$$|\vec{M}| = \left|\vec{F_W} \times \vec{r}\right| = \left|\vec{F_W}\right||\vec{r}|\sin \sphericalangle(\vec{F_W}, \vec{r})$$ gilt, wobei $\sphericalangle(\vec{F_W}, \vec{r}) \leq 10°$, insbesondere $\sphericalangle(\vec{F_W}, \vec{r}) \leq 5°$, gilt.

Gemäß einer bevorzugten Ausführungsform besitzt zumindest ein Umform-Werkzeug zwei Walzen, die an einem gemeinsamen Werkzeug-Halter befestigt, sowie einen Werkzeughalter, an dem beide Walzen drehbar befestigt sind. Die beiden Walzen besitzen jeweils eine Werkzeug-Drehachsen, die gemäß einer Ausführungsform parallel zueinander verlaufen. Alternativ verlaufen die beiden Werkzeug-Drehachsen unter einem Winkel zueinander, wobei die Umform-Werkzeuge sich in diesem Fall vorzugsweise in die gleiche Richtung verjüngen. Beispielsweise haben die Umform-Werkzeuge eine kegelstumpfförmige Form, wobei sie zudem ballig sein können.

Gemäß einer bevorzugten Ausführungsform sind die beiden Walzen so angeordnet, dass sie Kontakt miteinander haben. In anderen Worten sind die Walzen so dicht beieinander angeordnet, dass sie sich aneinander abstützen, wenn sie mit jeweils einer Zahnflanke in Eingriff stehen. Die Zahnflanken sind dann an gegenüber liegenden Zähnen ausgebildet.

Günstig ist es, wenn zumindest eine Walze eines Umform-Werkzeugs an seinem Umfang eine umlaufende Walz-Nut aufweist, so dass zwei gegenüberliegende Flanken des gleichen Zahns des Werkstücks mit diesem Umform-Werkzeug simultan walzbar sind. Eine auf das Umform-Werkzeug aufgebrachte Walzkraft führt dann dazu, dass die Walz-Nut leicht aufgebogen wird. Mit einem derartigen Werkzeug können die Zahnflanken besonders dicht am Zahngrund bearbeitet werden. Es ist möglich, nicht aber notwendig, dass alle Umform-Werkzeuge Walzen mit einer derartigen Walz-Nut besitzen.

Eine erfindungsgemäße Ausführungsform besitzt Umform-Werkzeuge, die so mit der Führung verbunden sind, dass die Werkzeug-Drehachsen auf einem gemeinsamen Kreis bewegbar sind. Die entstehende Bearbeitungs-Kinetik entspricht der beim Wirbeln. Es kommt zu einer Vielzahl schnell aufeinander folgender, kurzer und kräftiger Einwirkungen auf die Werkstück-Randzone, sodass starke Druckeigenspannungen eingebracht werden können.

In diesem Fall besitzt die Walzvorrichtung vorzugsweise einen Motor zum Bewegen der Werkzeug-Drehachsen auf einem Kreis oder einer ansonsten geschlossenen Bahn. Von allen auf der geschlossenen Bahn bewegten Umform-Werkzeugen steht in der Regel nur ein Umform-Werkzeug zur gleichen Zeit mit einem Werkstück in Kontakt.

Um die verfestigende Wirkung des Umform-Werkzeugs zu steigern, kann die Walzvorrichtung eine Ultraschallquelle aufweisen, die mit zumindest einem Umform-Werkzeug zum Beaufschlagen mit Ultraschall verbunden ist. Die durch die Ultraschallquelle hervorgerufene zusätzliche Schwingung des Umform-Werkzeugs bedingt eine stärkere Einwirkung auf die Werkstück-Randzone.

Gemäß einer bevorzugten Ausführungsform sind auf der Werkstückaufnahme mehrere Werkstücke, insbesondere Zahnräder, so aufgenommen, dass sich die Zahnflanken der Werkstücke jeweils zu zumindest einer durchgehenden Rille ergänzen und wobei die Führung ausgebildet ist zum Führen der Umform-Werkzeuge entlang der Rille. In anderen Worten führt die Führung die Umform-Werkzeuge, sodass deren Walzen in der zumindest einen Rille laufen.

Günstig ist es, wenn die Werkstückaufnahme zum drehfesten Aufnehmen der Werkstücke ausgebildet ist. So führt ein etwaig auf ein Werkstück wirkendes Drehmoment nicht zu einer Änderung des Werkstücks relativ zur Werkstückaufnahme.

Es kann eine besonders große Walzkraft aufgebracht werden, wenn die Führung ausgebildet ist zum Führen zumindest einer Mehrzahl an Umform-Werkzeugen, sodass sich die Drehachsen von deren Walzen senkrecht zur Rille bewegen. Insbesondere ist es vorteilhaft, wenn die Führung ausgebildet ist zum Aufbringen einer Festwalzkraft, die in einer Richtung auf den Mittelpunkt des Zahnrades verläuft. Auf diese Weise entsteht ein kleines oder verschwindendes Drehmoment, das auf das Zahnrad wirkt. Zudem werden die beiden Zahnflanken, die von einem Umform-Werkzeug simultan bearbeitet werden, mit einer gleich großen Walzkraft beaufschlagt.

Gemäß einer bevorzugten Ausführungsform besitzt die Führung ein erstes Führungselement und ein zweites Führungselement, das an dem ersten Führungselement geführt ist, wobei das erste Führungselement eine erste Zustellvorrichtung aufweist, mittels der das erste Umform-Werkzeug am ersten Führungselement befestigt ist und die ausgebildet ist zum Zustellen des ersten Umform-Werkzeugs mit einer vorgebbaren Walzkraft. So ist die Umformung unabhängig von etwaigen Gestaltabweichungen der Werkstücke.

Vorzugsweise führt die Zustellvorrichtung das Umform-Werkzeug ausschließlich linear. In anderen Worten ist es mittels der Zustellvorrichtung möglich, die Walzkraft unabhängig von einem sich etwaig ändernden Abstand zwischen dem Werkstück und dem ersten Führungselement aufzubringen. Formabweichungen der einzelnen Werkstücke untereinander führen dann nicht zu unterschiedlichen Randzoneneigenschaften.

Die Zustellvorrichtung weist vorzugsweise einen Hydraulikzylinder auf, sodass die Festwalzkraft über den Hydraulikdruck einstellbar ist. Alternativ oder zusätzlich kann die Zustellvorrichtung über eine Feder verfügen. Es ist möglich und stellt eine bevorzugte Ausführungsform dar, dass unterschiedliche Umformwerkzeuge Federn mit unterschiedlichen Federkonstanten aufweisen, sodass die Walzkraft bei den jeweiligen Umform-werkzeugen und somit die Randzoneneigenschaften bei den dazugehörigen Bereichen zumindest im Wesentlichen konstant bleiben. Die Formabweichungen der Werkstücke sind in der Regel so klein, dass trotz der Federn von einer konstanten Walzkraft bei den jeweiligen Umformwerkzeugen ausgegangen werden kann. Gemäß einer bevorzugten Ausführungsform besitzt die Zustellvorrichtung eine Einrichtung zum Einstellen des Abstands von der Walzvorrichtung zur Werkstückaufnahme und/oder zum Einstellen der Federvorspannung.

Vorzugsweise ist eine Mehrheit der Umform-Werkzeuge, insbesondere alle Umform-Werkzeuge, mittels einer Zustellvorrichtung befestigt. Es ist möglich, dass eine Zustellvorrichtung zwei oder mehr Umform-Werkzeuge zustellt, besonders günstig es aber, wenn jede Zustellvorrichtung nur genau ein Umform-Werkzeug mit Walzdruck beaufschlagt.

Vorzugsweise weist die Walzvorrichtung eine Druckfluid-Zuführvorrichtung zum, insbesondere individuellen, Beaufschlagen der zumindest einen Zustellvorrichtung mit Druckfluid auf. Insbesondere kann es vorteilhaft sein, dass jede Zustellvorrichtung individuell mit Druckfluid beaufschlagt oder ausgebildet ist. Dazu besitzt die Druckfluid-Zuführvorrichtung beispielsweise für jede Zustellvorrichtung ein Ventil zum Zu- und Abschalten von Fluiddruck.

Im Rahmen eines erfindungsgemäßen Verfahrens werden die Umform-Werkzeuge beispielsweise so mit dem zumindest einem Werkstück in Eingriff gebracht, dass die Zahnflanke in einem Zahnflankengrund umgeformt wird. Unter dem Zahnflankengrund wird dabei insbesondere das Intervall zwischen der 28°-Tangente und der 32°-Tangente verstanden. Die 32°-Tangente wird in einem kartesischen Koordinatensystem bestimmt, wobei eine 0°-Tangente im Zahngrund liegen würde.

Vorzugsweise wird das erste Umform-Werkzeug so bewegt, dass im Werkstück ein erster Umformbereich entsteht, in dem die Druckeigenspannung eingebracht werden, wobei das zweite Umform-Werkzeug so bewegt wird, dass im Werkstück ein zweiter Umformbereich entsteht, in dem Druckeigenspannung eingebracht werden, und wobei der erste Umformbereich und der zweite Umformbereich einander überlappen. Insbesondere werden die Umform-Werkzeuge zumindest in ihrer Mehrheit so bewegt, dass jeweilige Umformbereiche entstehen, in denen vor der Bearbeitung Zugeigenspannungen vorlagen und nach der Bearbeitung Druckeigenspannungen vorliegen oder in denen nach der Bearbeitung höhere und/oder tiefere Druckeigenspannungen erzielt werden.. Derartige Eigenspannungen lassen sich

beispielsweise röntgenographisch messen.

Vorzugsweise wird zumindest eines der Umform-Werkzeuge so bewegt, dass in dessen Umformbereich eine 30°-Tangente eines Zahns des Werkstücks verläuft. Es hat sich gezeigt, dass Druckeigenspannungen im Intervall um die 30°-Tangente einen besonders günstigen Einfluss auf die Dauerfestigkeit von Verzahnungen hat.

Vorzugsweise besitzt die Walzvorrichtung eine Werkstückaufnahme, auf der zumindest ein Zahnrad, insbesondere zumindest zwei Zahnräder, aufgenommen sind, wobei die erste wirksame axiale Dicke so gewählt ist, dass der erste Bereich im untersten Drittel eines radialen Abstands von der Drehachse des Zahnrads liegt. Der Punkt der Zahnflanke mit dem kleinesten radialen Abstand ist der Zahngrund. Der Punkt der Zahnflanke mit dem größten radialen Abstand liegt auf dem Hüllkreis, also dem Kreis minimalen Durchmessers, der das Zahnrad umgibt. Gemäß einer bevorzugten Ausführungsform ist die erste wirksame axiale Dicke so gewählt, dass die Kontaktpunkte des ersten Umform-Werkzeugs im untersten Drittel des radialen Abstands von der Drehachse des Zahnrads liegen, insbesondere im untersten Viertel.

Vorzugsweise hat zumindest ein Umform-Werkzeug, insbesondere haben zumindest zwei der Umform-Werkzeuge, in dem Abschnitt, in dem sie zum Umformen in Kontakt mit dem Werkstück kommen, einen konvexen Querschnitt. In anderen Worten liegt zumindest ein Umform-Werkzeug, insbesondere liegen zumindest zwei der Umform-Werkzeuge, vorzugsweise alle Umform-Werkzeuge, nur mit im Querschnitt konvexen Bereichen am Werkstück an. So wird eine hohe Flächenpressung bei geringer Reibbelastung erreicht.

Günstig ist es, wenn die Walzvorrichtung zumindest drei Umform-Werkzeuge mit unterschiedlichen wirksamen axialen Dicken aufweist. Im Rahmen eines erfindungsgemäßen Verfahrens wird eine Zahnflanke von zumindest zwei, insbesondere von zumindest drei, Umform-Werkzeugen mit unterschiedlichen wirksamen axialen Dicken bearbeitet.

Im Folgenden wird die Erfindung anhand der beigefügten Zeichnungen näher erläutert. Dabei zeigt

Figur 1        eine erfindungsgemäße Walzvorrichtung zum Durchführen eines erfindungsgemäßen Verfahrens,
Figur 2a       einen Querschnitt gemäß dem Schnitt A-A durch das Werkstück und ein Umform-Werkzeug,
Figur 2b       einen Querschnitt durch ein weiteres Umform-Werkzeugs einer erfindungsgemäßen Walzvorrichtung,
Figur 3a       eine erste mögliche Orientierung eines Umform-Werkzeugs zu den Zahnflanken eines Werkstücks,
Figur 3b       eine zweite mögliche Orientierung,
Figur 3c       ein Umform-Werkzeug mit zylindrischen Rollen, die einander nicht berühren, gemäß einer nicht erfindungsgemäßen Walzvorrichtung,
Figur 3d       ein Umform-Werkzeug mit zylindrischen Rollen die einander berühren, gemäß weiteren nicht erfindungsgemäßen Walzvorrichtung,
Figur 3e       ein Umform-Werkzeug mit kegelstumpfförmigen Rollen die einander nicht berühren, gemäß einer nicht erfindungsgemäßen Walzvorrichtung,
Figur 3f       ein Umform-Werkzeug mit kegelstumpfförmigen Rollen die einander berühren, gemäß einer weiteren nicht erfindungsgemäßen Walzvorrichtung,
Figur 3g       eine zweite Ausführungsform eines Umform-Werkzeugs einer erfindungsgemäßen Walzvorrichtung,
Figur 4        eine zweite Ausführungsform einer erfindungsgemäßen Walzvorrichtung,
Figur 5        eine dritte Ausführungsform einer erfindungsgemäßen Walzvorrichtung,
Figur 6        eine vierte Ausführungsform einer erfindungsgemäßen Walzvorrichtung,
Figur 7        eine fünfte Ausführungsform einer erfindungsgemäßen Walzvorrichtung,
Figur 8        eine sechste Ausführungsform einer erfindungsgemäßen Walzvorrichtung und
Figur 9        eine siebte Ausführungsform einer erfindungsgemäßen Walzvorrichtung.
Figur 10       zeigt eine Ausführungsform einer Walzvorrichtung mit einer Ultraschallquelle.

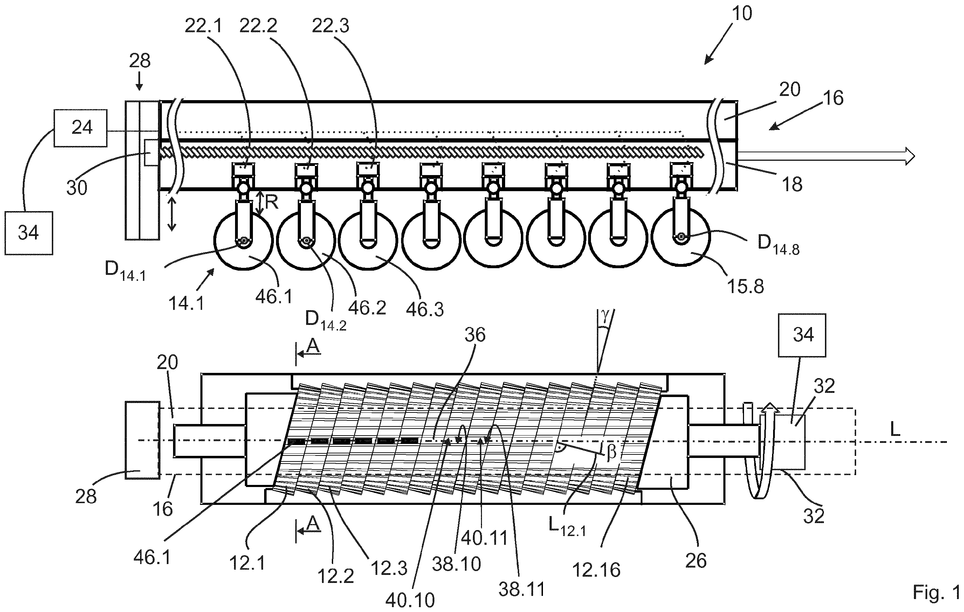

Figur 1 zeigt eine schematische Ansicht einer erfindungsgemäßen Walzvorrichtung 10 zum Walzen einer Vielzahl von Werkstücken 12.i (i=1, 2, 3, ...). Die Walzvorrichtung 10 besitzt eine Mehrzahl an Umform-Werkzeugen 14.i, die an einer Führung 16 befestigt sind. Selbstverständlich ist i lediglich ein Laufindex, sodass die Zahl der Umform-Werkzeuge 14.i nicht der Zahl der Werkstücke 12.i entsprechen muss.

Die Führung 16 umfasst ein erstes Führungselement 18 und ein zweites Führungselement 20, wobei das erste Führungselement 18 am zweiten Führungselement 20 geführt ist. Die Umform-Werkzeuge besitzen als Rollen, die um eine jeweilige Werkzeug-Drehachse $D_{14.i}$ drehbar gelagert sind. Das erste Führungselement 18 besitzt eine erste Zustellvorrichtung 22.1, die als Hydraulikzylinder ausgebildet ist und mittels der das erste Umform-Werkzeug 14.1 in einer Zustellrichtung R bewegt werden kann. Die Zustellvorrichtung 22 ist mit einer Druckfluid-Zuführvorrichtung 24 verbunden, sodass unter einem Fluiddruck p stehendes Druckfluid, beispielsweise einem Hydrauliköl, zugeführt werden kann.

Die Umform-Werkzeuge 14 (Bezugzeichen ohne Zählsuffix beziehen sich auf alle entsprechenden Objekte) besitzen jeweils eigene Zustellvorrichtungen 22. Über nicht eingezeichnete Ventile kann jede Zustellvorrichtung 22.i mit Fluiddruck beaufschlagt oder druckfrei geschaltet werden. Es ist zudem möglich, dass die Druckfluid-Zuführvorrichtung 24 zum Zuführen von Druckfluid mit einem für jede Zustellvorrichtung 22.i individuellen Fluiddruck $p_i$ ausgebildet ist.

Die Führung 16 ist im vorliegenden Fall als Linearführung ausgebildet und starr relativ zu einer Werkstückaufnahme 26 angeordnet. Im unteren Teilbild ist die Führung 16 schematisch angedeutet. Die Führung 16 kann beispielsweise mittels einer Linearachse 28 auf die Werkstückaufnahme 26 zugestellt werden. Die Linearachse 28 kann beispielsweise hydraulisch angetrieben sein. Zudem kann das erste Führungselement 18 mittels eines schematisch eingezeichneten Vortriebs 30 relativ zum zweiten Führungselement 20 bewegt werden. Der Vortrieb 30 kann beispielsweise einen Kugelgewindetrieb aufweisen, der von einem Elektromotor angetrieben ist. Alternativ kann das erste Führungselement 18 mittels eines Hydraulikzylinders relativ zum zweiten Führungselement 20 bewegbar ausgebildet sein.

Die Werkstückaufnahme 26 ist mittels eines Drehantriebs 32 um ihre Längsachse L automatisch drehbar. Der Drehantrieb 32 ist mit einer schematisch eingezeichneten Steuerung 34 verbunden, die auch mit der Druckfluid-Zuführvorrichtung 24 in Verbindung steht.

Das untere Teilbild zeigt, dass die Werkstücke 12.i, bei denen es sich um Zahnräder handelt, so angeordnet sind, dass sich Zahnflanken zu einer durchgehenden Rille 36 ergänzen. Dazu sind die Werkstücke 12.i unter einem Werkstückwinkel $\gamma$ relativ zur Längsachse, wobei der Werkstückwinkel $\gamma$ einem Schrägungswinkel $\beta$ entspricht, unter dem die Zahnflanken zu einer Längsachse $L_{12}$ des jeweiligen Werksstücks 12 verlaufen. Auf diese Weise verläuft die Rille 36 entlang der Längsachse L, das heißt, dass die Rille 36 mit der Längsachse L ein Winkel von 0° einschließt.

Die Steuerung 34 ist eingerichtet zum Zustellen der Umform-Werkzeuge 14 auf die Werkstücke 12.i zu, sodass die Rollen 46.i der Umform-Werkzeuge 14.i in die Rille 36 eingreifen, und zum nachfolgenden Bewegen der Umform-Werkzeuge 14.i durch die Rille 36, sodass jede Rolle 46.i der Umform-Werkzeuge 14.i mit jedem der Werkstücke 12.i in Kontakt kommt. Danach werden die Umform-Werkzeuge von den Werkstücken 12.i beabstandet und danach die einzelnen Werkstücke 12.i einzeln relativ zur Werkstückaufnahme 26 gedreht, sodass eine neue Rille so angeordnet ist, dass sie mit den Umform-Werkzeugen 14.i bearbeitet werden kann. Danach werden die Umform-Werkzeuge 14.i mit einer Walzkraft $F_W$ in diese Rille gedrückt und erneut entlang einer neu entstehenden Rille bewegt, sodass weitere Zahnflanken bearbeitet werden.

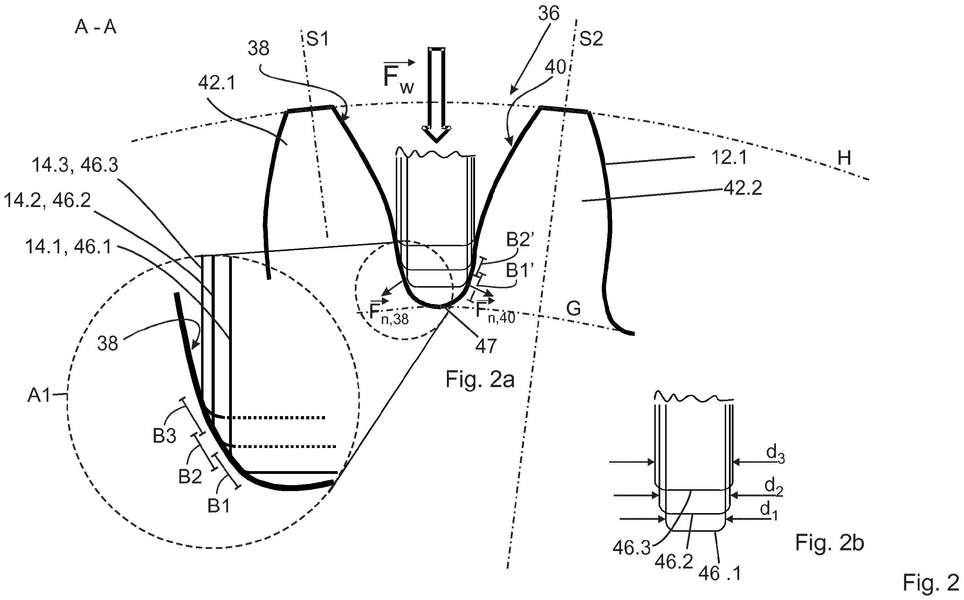

Figur 2 zeigt einen schematischen Schnitt entlang A-A. Im Ausschnitt A1 links ist schematisch eingezeichnet, wie die Umform-Werkzuge 14.1, 14.2 und 14.3 nacheinander an einer ersten Zahnflanke 38 vorbei rollen und sie dabei umformen. Dabei erzeugt das erste Umform-Werkzeug 14.1 mittels seiner Rolle 46.1 einen ersten umgeformten Bereich B1, das zweite Umform-Werkzeug 14.2 mittels seiner Rolle 46.2 einen zweiten umgeformten Bereich B2 das dritte Umform-Werkzeug 14.3 mittels seiner Rolle 46.3 einen dritten Bereich B3. Die drei Bereiche sind voneinander verschieden, das heißt, es existieren jeweils Punkte, die nur zu dem einen, nicht aber zu dem anderen Bereich gehören. Zudem überlappen die Bereiche B einander.

Eingezeichnet ist zudem ein Hüllkreis H. Das ist der Kreis kleinsten Durchmessers, der das Werkstück 12, beispielsweise das Zahnrad, umgibt. Ein Kreis G, der den gleichen Mittelpunkt hat wie der Hüllkreis H, verläuft durch einen Zahngrund 47. Der Zahnflankengrund erstreckt sich um den Zahngrund 47 herum.

Figur 2b zeigt, dass die Rollen 46.i unterschiedliche wirksame Dicken $d_i$ sitzen. So ist die wirksame axiale Dicke $d_1$ der Rolle 46.1 des ersten Umform-Werkzeugs 14.1 kleiner als die zweite wirksame Dicke $d_2$ der Rolle 46.2 des zweiten Umform-Werkzeugs $d_2$. Da die Zahnflanken benachbarter Zähne, hier die Zahnflanken 38 und 40 der Zähne 42.1 und 42.2, im Zahngrund 47 aufeinander zu verlaufen, dringen die Umform-Werkzeuge 14.1, 14.2, 14.3 unterschiedlich tief in den Zahnzwischenraum zwischen den beiden Zahnflanken 38, 40 ein, was dazu führt, dass unterschiedliche Bereiche Bi umgeformt werden.

Es ist zu erkennen, dass die Walzvorrichtung eine Werkstückaufnahme besitzt, auf der zumindest eine Zahnrad, insbesondere zumindest zwei Zahnräder, aufgenommen sind, wobei die erste wirksame axiale Dicke $d_1$ so gewählt ist, dass der erste Bereich B1 im untersten Drittel eines radialen Abstands von der Drehachse des Zahnrads 12 liegt. In anderen Worten ist ein radialer Abstand vom Kreis G kleiner als die Summe aus dem Radius des Kreises G und einem Drittel der Differenz zwischen den Radien der Kreise G und H.

Figur 2b zeigt, dass die Umform-Werkzeuge 14.i einspurig hintereinander angeordnet sind. Das heißt, dass deren Rollen 46.i in derselben Rille 36 aufeinander folgend laufen.

Bei der Anordnung gemäß Figur 2 wird die Walzkraft $\overrightarrow{F_W}$ in radialer Richtung eingebracht. In anderen Worten verläuft die Richtung, unter der die Walzkraft $\overrightarrow{F_W}$ eingebracht wird, auf einen in Figur 2 in nicht sichtbaren Mittelpunkt des Werkstücks 12 zu. Die Walzkraft $\overrightarrow{F_W}$ bildet mit einen ersten Strahl S1 der durch den Mittelpunkt des Werkstücks 12.1 und mittig durch den Zahn 42.1 geht, den gleichen Winkel wie zu einem zweiten Strahl S2, der durch den Mittelpunkt des Werkstücks 12 mittig durch den benachbarten Zahn 42.2. Aus diesem Grund ist eine Normalkraft $\overrightarrow{F_{n,38}}$, die senkrecht auf die erste Zahnflanke 38 wirkt, betragsmäßig so groß wie eine zweite Normalkraft $\overrightarrow{F_{n,40}}$, die auf die zweite Zahnflanke 40 wirkt. Durch die Walzkraftkomponenten wird in den Bereichen B1, B2,... die Oberflächenrauigkeit vermindert und es werden Druckeigenspannungen in die Randzone eingebracht.

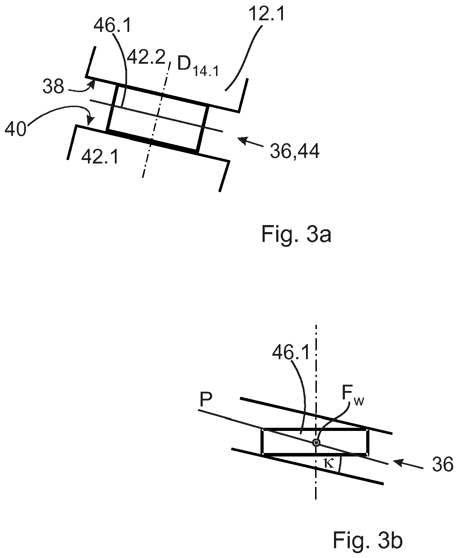

Figur 3a zeigt die Rolle 46.1 des Umform-Werkzeugs 14.1 in einem Zahnzwischenraum 44 zwischen der ersten Zahnflanke 38 und der zweiten Zahnflanke 40 des ersten Werkstücks 12.1, der Teil der Rille 36 ist. Es ist zu erkennen, dass die Drehachse $D_{14.1}$ senkrecht zur Erstreckungsrichtung des Zahnzwischenraums 44 und damit der Rille 36 verläuft. Damit verläuft die Drehachse $D_{14.1}$ auch senkrecht zu einem Bewegungspfad P entlang dem das Umform-Werkzeug 14.1 die bei der Bearbeitung relativ zum Werkstück bewegt wird. Die Trajektorie T verläuft entlang der Rille 36.

Figur 3b zeigt den Fall, dass die Drehachse $D_{14.1}$ ein Verkantungswinkel $\kappa$ zur Senkrechten zum Bewegungspfad P einnimmt. Dadurch entsteht ein im Drehmoment auf das Umform-Werkzeug 14, das parallel zur Walzkraft Fw verläuft.

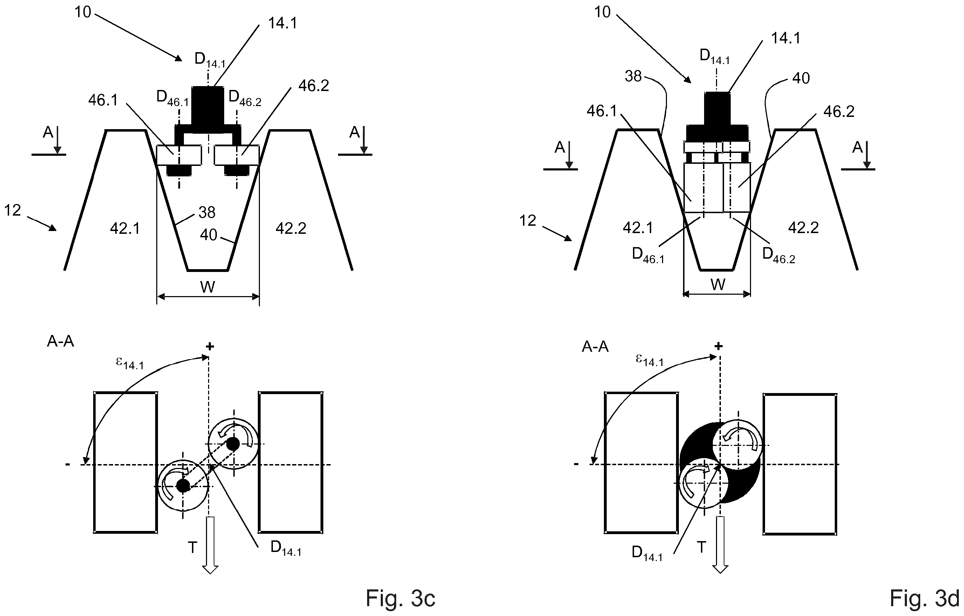

Figur 3c zeigt eine Ausführungsform eines Umform-Werkezugs 14.1, das zwei Walzen 46.1, 46.2 aufweist. Die Walzen sind in einem Käfig drehbar gelagert und stützen sich gegenseitig ab. Der Käfig ist um die Mittelachse $D_{14.1}$ drehbar. Durch Veränderung des Drehwinkels $\varepsilon_{14.1}$ kann die Wirkbreite W der Rollen verändert werden. Auf diese Weise können hintereinander angeordnete Rollenpaare auf unterschiedliche Breite zur Bearbeitung unterschiedlicher Zonen fest eigestellt sein. Alternativ können ein oder mehrere Rollenpaare die Rille 36 oszillierend durchfahren und die Wirkbreite kann mittels eines Schwenkantriebs jeweils für eine neue Bearbeitungszone verändert werden.

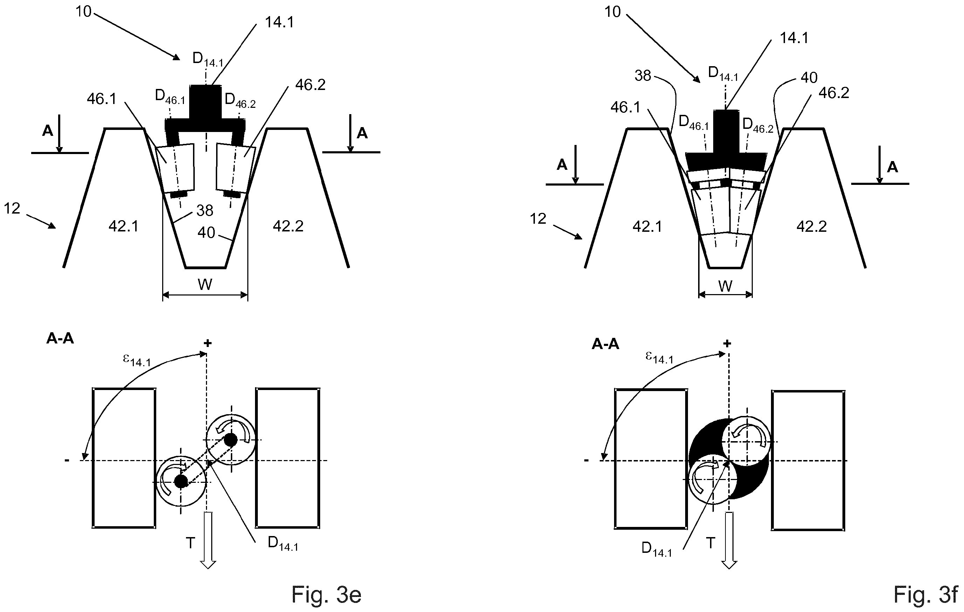

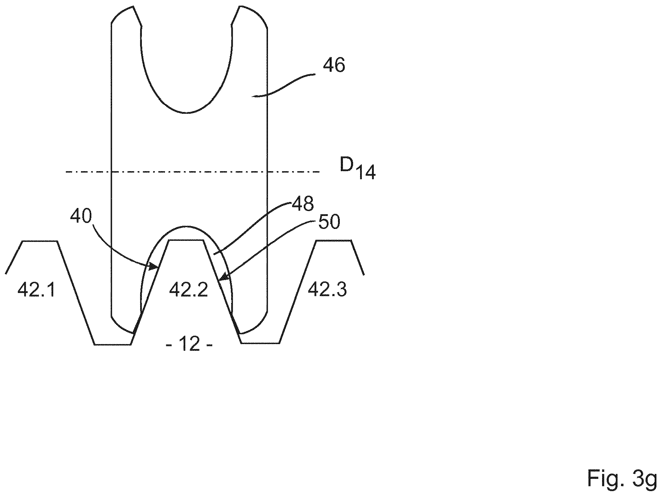

Figur 3 c zeigt ein Umform-Werkzeug 14.1, dass zwei Walzen 46.1 und 46.2 aufweist. Die beiden Walzen 46.1, 46.2 sind zylinderförmig und ihre jeweiligen Drehachsen $D_{46.1}$, $D_{46.2}$ verlaufen parallel zueinander. Der Abstand der Drehachsen $D_{46.1}$, $D_{46.2}$ sowie der Durchmesser der Walzen 46.1,46.2 bestimmt eine Wirkbreite W. Die Wirkbreite W gibt den Abstand der beiden Punkte an, in die simultan vom Umform-Werkzeug 14.1 bearbeitet wird.

Das untere Teilbild zeigt eine Ansicht von oben. Es ist zu erkennen, dass das Umform-Werkzeug 14.1 um einen Drehwinkel $\varepsilon$ gedreht werden kann. Durch Ändern des Drehwinkels $\varepsilon$ lässt sich damit die Wirkbreite W verändern. Die beiden Walzen 46.1, 46.2 sind voneinander beabstandet.

Figur 3d zeigt ein Umform-Werkzeug einer Walzvorrichtung, bei dem die Walzen 46.1, 46.2 miteinander in Kontakt stehen. Auf diese Weise können die auf die Zahnflanken wirkenden Kräfte einfach aufgenommen werden, sodass sie nicht an den jeweiligen Drehachsen $D_{46.1}$, $D_{46.2}$ anliegen. Auf diese Weise können hintereinander angeordnete Umform-Werkzeuge auf unterschiedliche Wirkbreiten W zur Bearbeitung unterschiedlicher Bereiche B (vgl. Figur 2) fest eingestellt sein. Alternativ kann ein oder mehrere Umform-Werkzeuge mit jeweils zwei Walzen 46.1, 46.2 die Rille 36 mehrfach durchfahren und die Wirkbreite kann W für jedes Durchfahren mittels eines Schwenkantriebes jeweils für eine neue Bearbeitungszone verändert werden. Die Walzen 46.1, 46.2 können in einem Käfig drehbar gelagert sein. Der Käfig ist um die Mittelachse $D_{14.1}$ drehbar. Durch Veränderung des Drehwinkels $\varepsilon$ kann die Wirkbreite W der Walzen 46.1, 46.2 verändert werden.

Figur 3e zeigt eine weitere Ausführungsform eines Umform-Werkzeugs für eine Walzvorrichtung, bei dem die Walzen 46.1, 46.2 stumpfförmig ausgebildet sind und einen Abstand voneinander aufweisen.

Figur 3f zeigt eine weitere Ausführungsform, bei der die Walzen 46.1, 46.2 kegelstumpfförmig ausgebildet sind und einander berühren. Die Walzen 46.1, 46.2 können bei jeder der genannten Ausführungsformen eine Balligkeit aufweisen.

Figur 3g zeigt eine weitere Ausführungsform eines Umform-Werkzeugs 14, dessen Rolle 46 an ihrem Umfang eine Walz-Nut 48 besitzt. Die Walz-Nut 48 ist so ausgebildet, dass ein Zahn, im vorliegenden Fall der Zahn 42.2, an seinen zwei gegenüberliegenden Zahnflanken 40, 50 simultan bearbeitbar ist.

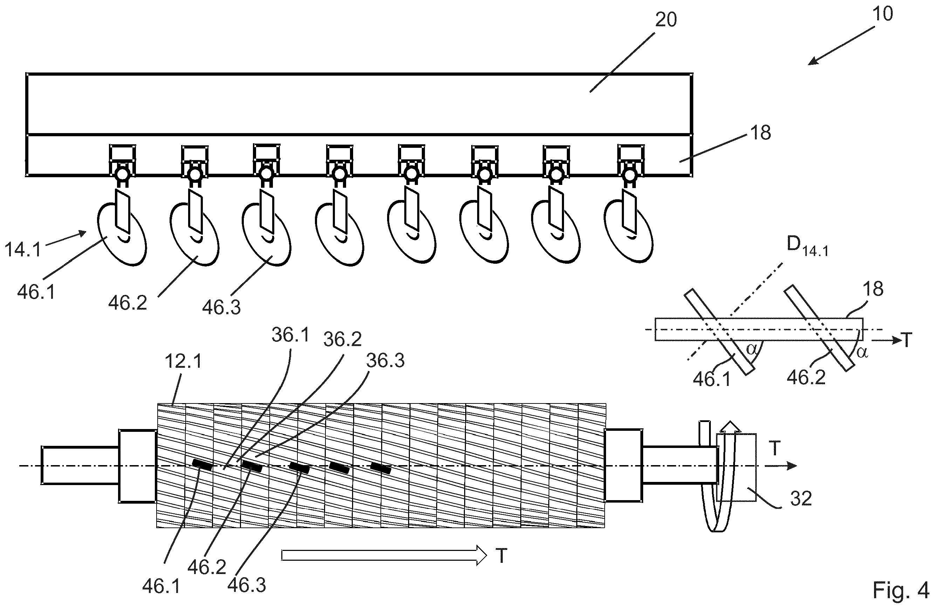

Figur 4 zeigt eine weitere Ausführungsform einer erfindungsgemäßen Walzvorrichtung 10, bei der die Umform-Werkzeuge 14.i mehrspurig hintereinander angeordnet sind, in anderen Worten laufen die einzelnen Rollen 46.i der Umform-Werkzeuge 14.i in unterschiedlichen Rillen. So läuft die Rolle 46.1 des ersten Umform-Werkzeugs 14.1 in der ersten Rille 36.1, die Rolle 46.2 des zweiten Umform-Werkzeugs in der Rille 36.2, die Rolle 46.3 des dritten Umform-Werkzeugs 14.3 in der dritten Rille 36.3. Die Trajektorie T der Bewegung des ersten Führungselements 18 verläuft entlang der Längsachse L. in der vorliegenden Ausführungsform die Führung 16 folglich eine Linearführung.

Die Umform-Werkzeuge 14 sind unter einem Werkzeugwinkel $\alpha$ an der an dem ersten Führungselement 18 befestigt, der von 90° verschieden ist. Der Werkstückwinkel $\gamma$ bezeichnet den Winkel, unter dem eine Laufrichtung des Umform-Werkzeugs 14 zur Trajektorie T verläuft. Der Werkzeugwinkel $\alpha$ entspricht dem Winkel, den die jeweilige Drehachse D oder beispielsweise die Drehachse $D_{14.1}$, mit der Senkrechten auf die Trajektorie T bildet. Bei einer Linearführung entspricht die Trajektorie T der Richtung, in der das erste Führungselement 18 sich relativ zum zweiten Führungselement 20 bewegen kann, also einer Geraden.

Bei der Ausführungsform gemäß Figur 4 ist der Drehantrieb 32 ausgebildet zum kontinuierlichen Drehen, während sich die Umform-Werkzeuge 14.i entlang der Längsachse L bewegen. Der Ausführungsform gemäß Figur 1 ist der Werkzeugwinkel $\alpha = 0°$.

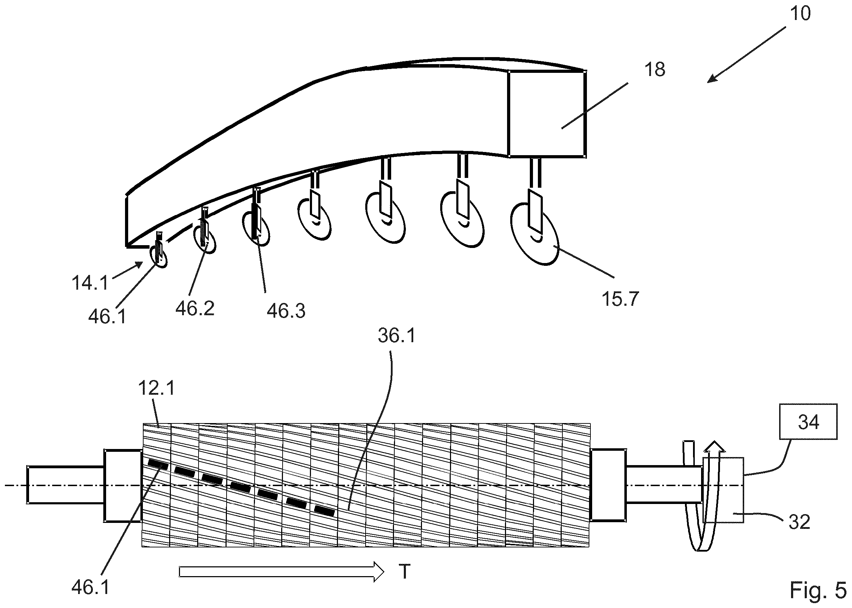

Figur 5 zeigt eine weitere Ausführungsform einer erfindungsgemäßen Walzvorrichtung 10, bei der die Umform-Werkzeuge 14.i einspurig angeordnet sind. Das erste Führungselement 18 ist helikal ausgebildet, sodass die Umform-Werkzeuge 14.i die Werkstücke 12.i simultan umformen können. Dabei laufen alle Rollen 46.i der Umform-Werkzeuge 14.i in der gleichen Rille 36.1.

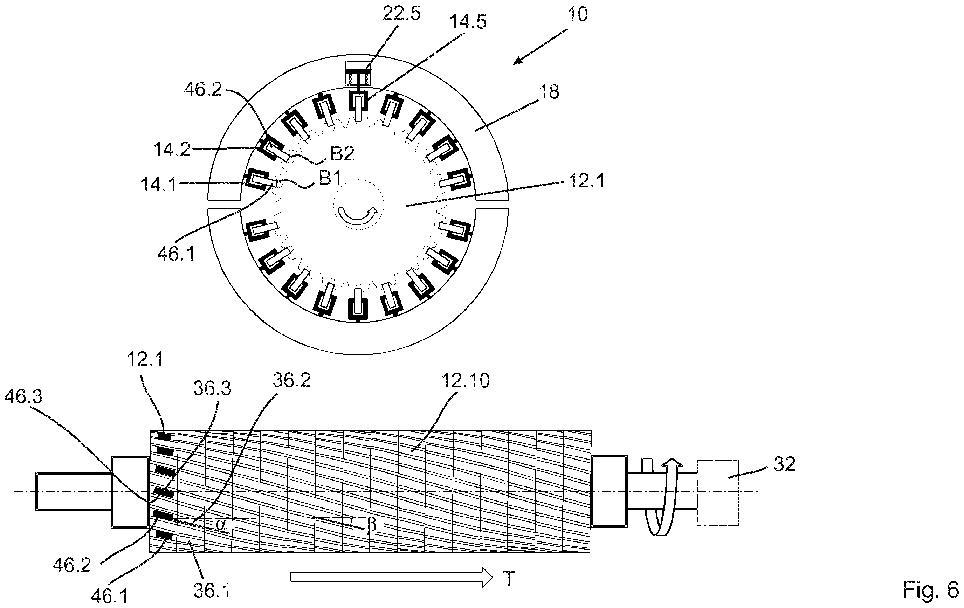

Figur 6 zeigt eine weitere Ausführungsform einer erfindungsgemäßen Walzvorrichtung 10, bei der, wie bei den vorherigen Ausführungsformen, jedes Umform-Werkzeug 14.i mittels einer Zustellvorrichtung 22 am ersten Führungselement 18 befestigt wird. Der Übersichtlichkeit halber ist jedoch lediglich die Zustellvorrichtung 22.5 eingezeichnet. Das erste Führungselement 18 ist so ausgebildet, dass die Umform-Werkzeuge entlang eines gedachten Kreisbogens entlang dem ersten Führungselement 18 angeordnet sind. Auf diese Weise ist es möglich, dass die Umform-Werkzeuge simultan mit dem gleichen Werkstück, in Eingriff bringbar sind.

Das untere Teilbild zeigt, wie die Umform-Werkzeuge simultan in Eingriff mit dem ersten Werkstück 12.1 stehen. Mit anderen Worten greifen unterschiedliche Rollen 46.i der Umform-Werkzeuge zum gleichen Zeitpunkt in verschiedene Rillen ein und bearbeiten die jeweiligen Zahnflanken. Der Drehantrieb 32 ist zum kontinuierlichen Drehen eingerichtet, die Rollen 46.i der Umform-Werkzeuge 14.i sind unter dem Werkzeugwinkel $\alpha$ am ersten Führungselement 18 angebracht, der dem Schrägungswinkel $\beta$ der Werkstücke 12.i entspricht. Die Zahl der Umform-Werkzeuge 14.i entspricht der Hälfte der Zahl der Zähne. Durch zwei Bearbeitungsdurchgänge können so alle Zahnflanken aller Werkstücke bearbeitet werden.

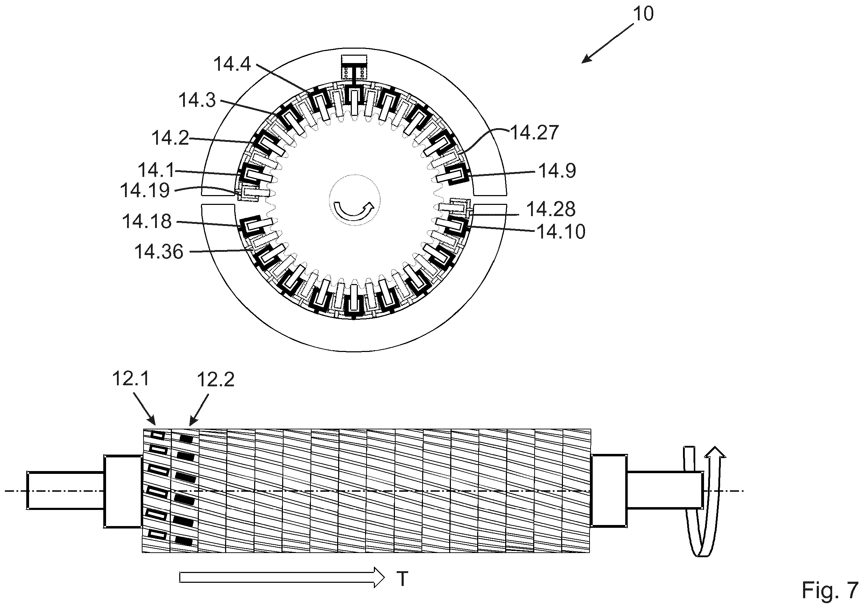

Figur 7 zeigt eine weitere Ausführungsform einer erfindungsgemäßen Walzvorrichtung 10, die neben einem ersten Satz an Umform-Werkzeugen, die entlang einem ersten gedachten Kreisbogen am ersten Führungselement 18 angeordnet sind, wie dies in Figur 6 gezeigt ist, weitere Umform-Werkzeuge aufweist, die entlang einem zweiten Kreisbogen angeordnet sind, der in axialer Richtung vom ersten beabstandet ist. Im Einsatz sind die Werkzeuge 14.1, ..., 14.18 des ersten Rings beispielsweise mit dem zweiten Werkstück 12.2 im Eingriff, wohingegen die Umform-Werkzeuge 14.19, ..., 14.36 des zweiten Rings mit dem ersten Werkstücks 12.1 im Eingriff sind. Selbstverständlich können noch mehrere Sätze an Umform-Werkzeugen 14 vorhanden sein, wobei jeder Satz an Umform-Werkzeugen 14 entlang eines Ringes angeordnet ist.

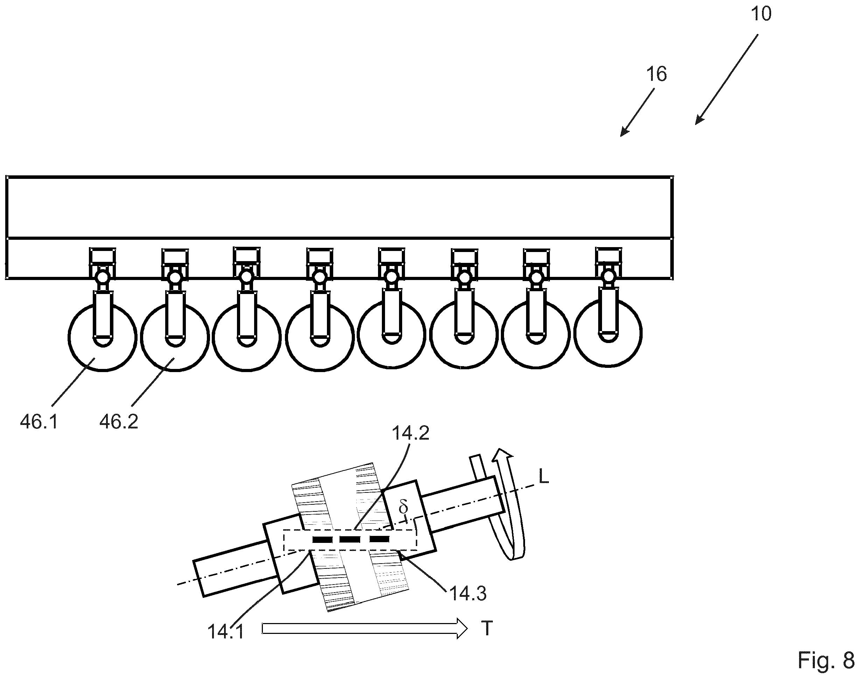

Figur 8 zeigt eine weitere Ausführungsform einer erfindungsgemäßen Walzvorrichtung 10, bei der die Führung 16 eine Linearführung ist, die, wie im unteren Teilbild schematisch gezeigt ist, zur Führung der Umform-Werkzeuge 14.i unter einen Kippwinkel $\delta$ zur Längsachse L ausgebildet ist.

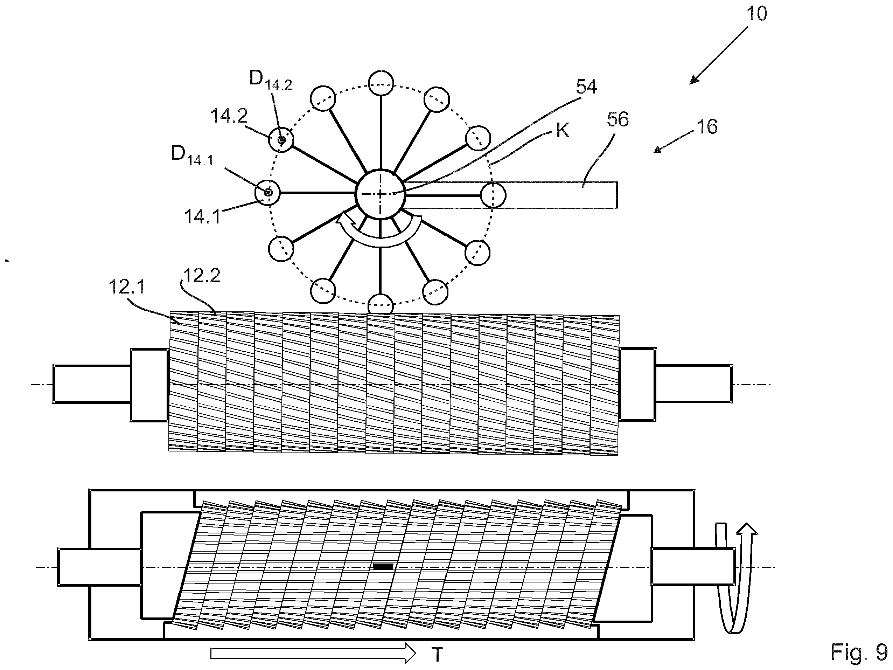

Figur 9 zeigt eine weitere Ausführungsform einer erfindungsgemäßen Walzvorrichtung 10, bei der die Umform-Werkzeuge 14.i an einer Führung 16 befestigt sind, die eine kombinierte Dreh- und Translationsbewegung ermöglicht. In anderen Worten ist die Führung 16 in der vorliegenden Ausführungsform eine kombinierte Dreh-Linearführung, die eine Drehvorrichtung 54 und eine Linearachse 56 aufweist.

Die Werkzeug-Drehachsen $D_{14.i}$ bewegen sich auf einem gemeinsamen Kreis K. Diese Ausführungsform unterscheidet sich von den bisherigen Ausführungsformen dadurch, dass jedes einzelne Umform-Werkzeug 14.i jeweils nur eine kurze Zeit mit dem jeweiligen Werkstück in Kontakt kommt und somit nur ein kurzen Umformweg zurücklegt, bevor sich das jeweilige Umform-Werkzeug 14.i wieder vom Werkstück entfernt.

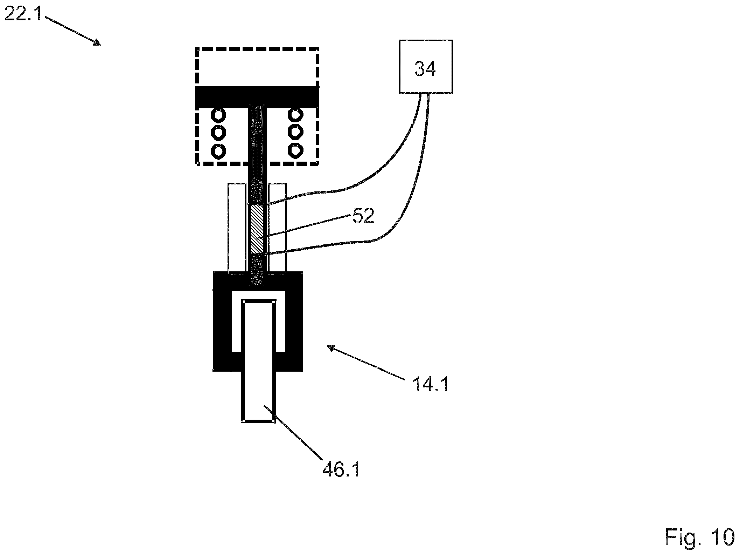

Figur 10 zeigt eine Zustellvorrichtung 22, die eine Ultraschallquelle 52 aufweist. Die Ultraschallquelle 52 ist mit einer Ansteuereinheit 34 verbunden, die sie mit einem hochfrequenten Wechselstrom beaufschlagt. Der Ultraschall führt zu einer Verstärkung der Walzwirkung des Werkzeugs 14.1.

## Bezugszeichenliste

| | | | |
|---|---|---|---|
| 10 | Walzvorrichtung | | |
| 12 | Werkstück | B | Bereich |
| 14 | Umform-Werkzeug | d | Dicke |
| 16 | Führung | D | Drehachse |
| 18 | erstes Führungselement | $F_n$ | Normalkraft |
| 20 | zweites Führungselement | $F_W$ | Walzkraft |
| 22 | Zustellvorrichtung | K | Kreis |
| 24 | Druckfluid-Zuführvorrichtung | L | Längsachse |
| 25 | Vorrichtung | p | Fluiddruck |
| 26 | Werkstückaufnahme | R | Zustellrichtung |
| 28 | Linearachse | S | Strahl |
| 30 | Vortrieb | T | Trajektorie |
| 32 | Drehantrieb | W | Wirkbreite |
| 34 | Steuerung | G | Kreis durch Zahngrund |
| 36 | Rille | H | Hüllkreis |
| 38 | erste Zahnflanke | $\alpha$ | Werkzeugwinkel |
| 40 | zweite Zahnflanke | $\beta$ | Schrägungswinkel |
| 42 | Zahn | $\gamma$ | Werkstückwinkel |
| 44 | Zahnzwischenraum | $\delta$ | Kippwinkel |

(fortgesetzt)

| 46 | Walze | ε | Drehwinkel |
|----|-------|---|-----------|
| 47 | Zahngrund | κ | Verkantungswinkel |
| 48 | Walz-Nut | | |
| 50 | Zahnflanke | | |
| 52 | Ultraschallquelle | | |
| 54 | Drehvorrichtung | | |
| 56 | Linearachse | | |

**Patentansprüche**

1. Walzvorrichtung zum Walzen von Werkstücken mit Verzahnung, insbesondere Zahnrädern, mit

   (a) einem ersten Umform-Werkzeug (14.1),
   (b) zumindest einem zweiten Umform-Werkzeug (14.2) und
   zumindest einer Führung (16), die ausgebildet ist zum geführten Bewegen der Umform-Werkzeuge (14.1, 14.2) relativ zu einem Werkstück, sodass mit dem ersten Umform-Werkzeug (14.1) ein erster Bereich (B1) einer Zahnflanke (38) des Werkstücks umformbar ist,
   (c) wobei das erste Umform-Werkzeug (14.1) eine erste Rolle (46.1) aufweist, die um eine erste Werkzeug-Drehachse (D14.1) drehbar gelagert ist,
   (d) wobei das zweite Umform-Werkzeug (14.2) eine zweite Rolle (46.2) aufweist, die um eine zweite Werkzeug-Drehachse ($D_{14.2}$) drehbar gelagert und
   (e) wobei die erste Rolle (46.1) an ihrem Umfang eine erste wirksame axiale Dicke ($d_1$) hat,
   **dadurch gekennzeichnet, dass**
   (f) die zweite Rolle (46.2) an ihrem Umfang eine zweite wirksame axiale Dicke ($d_2$) hat, die sich von der ersten wirksamen axialen Dicke ($d_1$) unterscheidet, sodass mit dem zweiten Umform-Werkzeug (14.2) ein zweiter Bereich (B2) der Zahnflanke (38), der vom ersten Bereich verschieden ist, umformbar ist.

2. Walzvorrichtung nach Anspruch 1, **dadurch gekennzeichnet, dass**

   - die Umform-Werkzeuge (14.1, 14.2) an der Führung (16) befestigt sind und/oder
   - die Führung zum Bewegen der Umform-Werkzeuge (14.1, 14.2) ausgebildet ist.

3. Walzvorrichtung nach einem der vorstehenden Ansprüche, **gekennzeichnet durch**

   (a) eine Werkstückaufnahme (26), insbesondere eine Zahnradaufnahme, zum Aufnehmen eines ersten Werkstücks (12.1), insbesondere eines ersten Zahnrads, und zumindest eines zweiten Werkstücks (12.2), insbesondere eines zweiten Zahnrads,
   (b) wobei die zumindest eine Führung (16) zum Führen der Umform-Werkzeuge (14) relativ zur Werkstückaufnahme (26) ausgebildet ist.

4. Walzvorrichtung nach Anspruch 3, **dadurch gekennzeichnet, dass** die Werkzeugaufnahme (26) ausgebildet ist zum Aufnehmen der Zahnräder (12) unter ihrem Schrägungswinkel (β) und dadurch, dass sie einen Drehantrieb (32) zum Drehen der Werkstücke (12) und/oder der Werkzeugaufnahme (26) relativ zur Führung (16) besitzt.

5. Walzvorrichtung nach einem der vorstehenden Ansprüche, **dadurch gekennzeichnet, dass** die Umform-Werkzeuge (14) so an der Führung (16) angebracht sind, dass

   - mehr als ein Umform-Werkzeug (14.1, 14.2) mit dem ersten Werkstück (12.1) in Eingriff bringbar ist und
   - simultan dazu mehr als ein Umform-Werkzeug (14.19. 14.20) mit einem zweiten Werkstück (12.2) in Eingriff bringbar ist.

6. Walzvorrichtung nach einem der vorstehenden Ansprüche, **dadurch gekennzeichnet, dass** die Umform-Werkzeuge (14) angeordnet sind zum simultanen Aufbringen einer ersten Walzkraftkomponente ($F_{w,38}$), die auf eine erste Zahnflanke (38) wirkt, und

einer zweiten Walzkraftkomponente ($F_{w,40}$), die auf die gegenüberliegende Zahnflanke (40) wirkt, wobei die erste Walzkraftkomponente ($F_{w,38}$) betragsmäßig der zweiten Walzkraftkomponente ($F_{w,40}$) entspricht.

7. Walzvorrichtung nach einem der vorstehenden Ansprüche, **dadurch gekennzeichnet, dass** die Umform-Werkzeuge (14) so mit der Führung (16) verbunden sind, dass die Werkzeug-Drehachsen (D) auf einem gemeinsamen Kreis (K) bewegbar sind.

8. Walzvorrichtung nach einem der Ansprüche 3 bis 4 oder 5 bis 7 wenn abhängig von 3 oder 4, **dadurch gekennzeichnet, dass**

    - die Werkstückaufnahme (26) ausgebildet ist zum Aufnehmen einer Vielzahl an Werkstücken (12), insbesondere schrägverzahnten Zahnrädern, sodass sich Zahnflanken (38, 40) der Werkstücke (12) zu zumindest einer durchgehenden Rille (36) ergänzen,
    - die Führung (16) ausgebildet ist zum Führen der Umform-Werkzeuge (14) entlang der Rille (36).

9. Walzvorrichtung nach einem der vorstehenden Ansprüche, **dadurch gekennzeichnet, dass**

    - die Führung (16) ein erstes Führungselement (18) und ein zweites Führungselement (20) aufweist, an dem das erste Führungselement (18) geführt ist, und
    - das erste Führungselement (18) eine erste Zustellvorrichtung (22.1) aufweist, mittels der das erste Umform-Werkzeug (14.1) am ersten Führungselement (18) befestigt ist und die ausgebildet ist zum Zustellen des ersten Umform-Werkzeugs (14.1) mit einer vorgebbaren Walzkraft ($F_w$).

10. Verfahren zum Walzen von Zähnen eines Werkstücks (12), mit den Schritten:

    (a) Anordnen des Werkstücks (12) auf einer Werkstückaufnahme (26) einer Walzvorrichtung (10) nach einem der vorstehenden Ansprüche und
    (b) gemeinsames geführtes Bewegen eines ersten Umform-Werkzeugs (14.1) und zumindest eines zweiten Umform-Werkzeugs (14.2) relativ zur Werkstückaufnahme (26), sodass

    mit dem ersten Umform-Werkzeug (14.1) ein erster Bereich (B1) einer Zahnflanke (38) des Werkstücks (12) umgeformt wird und
    mit dem zweiten Umform-Werkzeug (14.2)
    ein zweiter Bereich (B2) der Zahnflanke (38), der vom ersten Bereich (B1) verschieden ist, und/oder
    ein zweiter Bereich (B2') einer zweiten Zahnflanke (40), umgeformt wird.

11. Verfahren nach Anspruch 10, **dadurch gekennzeichnet, dass** die Umform-Werkzeuge (14) so mit dem zumindest einen Werkstück (12) in Eingriff gebracht werden, dass die Zahnflanke (38) in einem Zahnflankengrund (47) umgeformt wird.

**Claims**

1. A rolling device for rolling work pieces with toothing, in particular gear wheels, with

    (a) a first shaping tool (14.1),
    (b) at least a second shaping tool (14.2) and
    at least one guide (16) designed for the guided movement of the shaping tools (14.1, 14.2) relative to a work piece, so that a first region (B1) of a tooth flank (38) of the work piece can be shaped with the first shaping tool (14.1),
    (c) wherein the first shaping tool (14.1) has a first roller (46.1) that is rotatably mounted about a first tool rotational axis (D14.1),
    (d) wherein the second shaping tool (14.2) has a second roller (46.2) that is rotatably mounted about a second tool rotational axis ($D_{14.2}$) and
    (e) wherein the first roller (46.1) has a first effective axial thickness ($d_1$) on the circumference thereof,
    **characterised in that**
    (f) the second roller (46.2) has a second effective axial thickness ($d_2$) on the circumference thereof which differs from the first effective axial thickness ($d_1$) such that a second region (B2) of the tooth flank (38) that is different from the first region can be shaped with the second shaping tool (14.2).

2. The rolling device according to claim 1, **characterised in that**

- the shaping tools (14.1, 14.2) are fixed to the guide (16) and/or
- the guide is designed to move the shaping tools (14.1, 14.2).

3. The rolling device according to one of the preceding claims, **characterised by**

(a) a work piece accommodation (26), especially a gear wheel accommodation, for housing a first work piece (12.1), especially a first gear wheel, and at least a second work piece (12.2), especially a second gear wheel, (b) wherein the at least one guide (16) is designed to guide the shaping tools (14) relative to the work piece accommodation (26).

4. The rolling device according to claim 3, **characterised in that** the tool accommodation (26) is designed to house the gear wheels (12) at a helix angle ($\beta$), and that it comprises a rotary actuator (32) for rotating the work pieces (12) and/or the tool accommodation (26) relative to the guide (16).

5. The rolling device according to one of the preceding claims, **characterised in that** the shaping tools (14) are mounted on the guide (16) in such a way that

- more than one shaping tool (14.1, 14.2) can be engaged with the first work piece (12.1) and
- more than one shaping tool (14.19, 14.20) can be simultaneously engaged with a second work piece (12.2).

6. The rolling device according to one of the preceding claims, **characterised in that** the shaping tools (14) are arranged to simultaneously apply a first rolling force component ($F_{w,38}$) that acts on a first tooth flank (38), and a second rolling force component ($F_{w,40}$) that acts on the opposing tooth flank (40), wherein the first rolling force component ($F_{w,38}$) corresponds to the second rolling force component ($F_{w,40}$) in terms of value.

7. The rolling device according to one of the above claims, **characterised in that** the shaping tools (14) are connected to the guide (16) such that the tool rotational axes (D) can be moved on a common circle (K).

8. The rolling device according to one of the claims 3 to 4 or 5 to 7, **characterised in that**

- the work piece accommodation (26) is designed to house a number of work pieces (12), in particular gear wheels with oblique teeth, such that tooth flanks (38, 40) of the work pieces (12) come together to form at least one continuous groove (36),
- the guide (16) is designed to guide the shaping tools (14) along the groove (36).

9. The rolling device according to one of the above claims, **characterised in that**

- the guide (16) comprises a first guide element (18) and a second guide element (20) on which the first guide element (18) is guided, and
- the first guide element (18) comprises a first advancing device (22.1) by means of which the first shaping tool (14.1) is fixed to the first guide element (18) and that is configured to advance the first shaping tool (14.1) with a definable rolling force ($F_w$).

10. A method for rolling teeth of a work piece (12) comprising the steps:

(a) arranging the work piece (12) on a work piece accommodation (26) of a rolling device (10) according to one of the preceding claims and
(b) mutual guided movement of a first shaping tool (14.1) and at least a second shaping tool (14.2) relative to the work piece accommodation (26), such that a first region (B1) of a tooth flank (38) of the work piece (12) can be shaped with the first shaping tool (14.1) and

a second region (B2) of the tooth flank (38) which is different to the first region (B1) and/or a second region (B2') of a second tooth flank (40) is shaped

by the second shaping tool (14.2).

**11.** The method according to claim 10, **characterised in that** the shaping tools (14) can be engaged with the at least one work piece (12) such that the tooth flanks (38) are shaped at a tooth flank base (47).

**Revendications**

**1.** Dispositif de galetage pour galeter des pièces à usiner présentant une denture, en particulier des roues dentées, comportant

(a) un premier outil de mise en forme (14.1),
(b) au moins un deuxième outil de mise en forme (14.2) et
au moins un guidage (16) qui est réalisé pour le déplacement guidé des outils de mise en forme (14.1, 14.2) par rapport à une pièce à usiner, de sorte qu'une première zone (B1) d'un flanc de dent (38) de la pièce à usiner peut être mise en forme avec le premier outil de mise en forme (14.1),
(c) le premier outil de mise en forme (14.1) présentant un premier galet (46.1) qui est monté de façon mobile en rotation autour d'un premier axe de rotation d'outil ($D_{14.1}$),
(d) le deuxième outil de mise en forme (14.2) présentant un deuxième galet (46.2) qui est monté de façon mobile en rotation autour d'un deuxième axe de rotation d'outil ($D_{14.2}$), et
(e) le premier galet (46.1) ayant sur sa périphérie une première épaisseur axiale effective ($d_1$),
**caractérisé en ce que**
(f) le deuxième galet (46.2) présente sur sa périphérie une deuxième épaisseur axiale effective ($d_2$) qui est différente de la première épaisseur axiale effective ($d_1$), de sorte qu'une deuxième zone (B2) du flanc de dent (38), qui est différente de la première zone, peut être mise en forme avec le deuxième outil de mise en forme (14.2).

**2.** Dispositif de galetage selon la revendication 1, **caractérisé en ce que**

- les outils de mise en forme (14.1, 14.2) sont fixés au guidage (16), et/ou
- le guidage est réalisé pour déplacer les outils de mise en forme (14.1, 14.2).

**3.** Dispositif de galetage selon l'une des revendications précédentes, **caractérisé par**

(a) un logement de pièce (26), en particulier un logement de roue dentée, pour recevoir une première pièce à usiner (12.1), en particulier une première roue dentée, et au moins une deuxième pièce à usiner (12.2), en particulier une deuxième roue dentée,
(b) ledit au moins un guidage (16) étant réalisé pour guider les outils de mise en forme (14) par rapport au logement de pièce (26).

**4.** Dispositif de galetage selon la revendication 3, **caractérisé en ce que** le logement d'outil (26) est réalisé pour recevoir les roues dentées (12) selon leur angle d'hélice ($\beta$), et **en ce qu'**il comporte un entraînement en rotation (32) pour faire tourner les pièces à usiner (12) et/ou le logement d'outil (26) par rapport au guidage (16).

**5.** Dispositif de galetage selon l'une des revendications précédentes, **caractérisé en ce que** les outils de mise en forme (14) sont montés sur le guidage (16) de telle sorte que

- plus d'un outil de mise en forme (14.1, 14.2) peut être mis en prise avec la première pièce à usiner (12.1), et
- simultanément, plus d'un outil de mise en forme (14.19, 14.20) peut être mis en prise avec une deuxième pièce à usiner (12.2).

**6.** Dispositif de galetage selon l'une des revendications précédentes, **caractérisé en ce que**

les outils de mise en forme (14) sont agencés pour appliquer simultanément une première composante de force de galetage ($F_{w,38}$) qui agit sur un premier flanc de dent (38), et
une deuxième composante de force de galetage ($F_{w,40}$) qui agit sur le flanc de dent opposé (40),
la première composante de force de galetage ($F_{w,38}$) correspondant en valeur absolue à la deuxième composante de force de galetage ($F_{w,40}$).

**7.** Dispositif de galetage selon l'une des revendications précédentes, **caractérisé en ce que** les outils de mise en forme (14) sont reliés au guidage (16) de telle sorte que les axes de rotation (D) des outils sont mobiles sur un cercle commun (K).

**8.** Dispositif de galetage selon l'une des revendications 3 à 4 ou 5 à 7, prises en dépendance de la revendication 3 ou 4, **caractérisé en ce que**

- le logement de pièce (26) est réalisé pour recevoir une pluralité de pièces à usiner (12), en particulier des roues dentées à denture hélicoïdale, de sorte que les flancs de dent (38, 40) des pièces à usiner (12) se complètent pour donner au moins une rainure continue (36),
- le guidage (16) est réalisé pour guider les outils de mise en forme (14) le long de ladite rainure (36).

**9.** Dispositif de galetage selon l'une des revendications précédentes, **caractérisé en ce que**

- le guidage (16) comporte un premier élément de guidage (18) et un deuxième élément de guidage (20) sur lequel le premier élément de guidage (18) est guidé, et
- le premier élément de guidage (18) présente un premier dispositif d'approche (22.1), au moyen duquel le premier outil de mise en forme (14.1) est fixé au premier élément de guidage (18) et qui est réalisé pour approcher le premier outil de mise en forme (14.1) avec une force de galetage ($F_w$) prédéfinissable.

**10.** Procédé de galetage des dents d'une pièce à usiner (12), comprenant les étapes consistant à :

(a) mettre en place la pièce à usiner (12) sur un logement de pièce (26) d'un dispositif de galetage (10) selon l'une des revendications précédentes et

(b) déplacer de façon guidé conjointement un premier outil de mise en forme (14.1) et au moins un deuxième outil de mise en forme (14.2) par rapport au logement de pièce (26), de sorte que

une première zone (B1) d'un flanc de dent (38) de la pièce à usiner (12) est mise en forme avec le premier outil de mise en forme (14.1), et

une deuxième zone (B2) du flanc de dent (38), qui est différente de la première zone (B1), et/ou une deuxième zone (B2') d'un deuxième flanc de dent (40) est mise en forme avec le deuxième outil de mise en forme (14.2).

**11.** Procédé selon la revendication 10, **caractérisé en ce que** les outils de mise en forme (14) sont mis en prise avec ladite au moins une pièce à usiner (12) de telle sorte que le flanc de dent (38) est mis en forme dans un fond de flanc de dent (47).

Fig. 1

EP 3 414 030 B1

A - A

Fig. 2a

Fig. 2b

Fig. 2

EP 3 414 030 B1

Fig. 3a

Fig. 3b

Fig. 3d

Fig. 3c

Fig. 3f

Fig. 3e

Fig. 3g

Fig. 4

EP 3 414 030 B1

10

18

14.1

46.1

46.2

46.3

15.7

12.1

36.1

46.1

T

34

32

Fig. 5

EP 3 414 030 B1

EP 3 414 030 B1

Fig. 6

EP 3 414 030 B1

Fig. 7

Fig. 8

10

16

46.2

46.1

14.2

14.3

14.1

δ

L

T

Fig. 9

Fig. 10

34

52

14.1

46.1

22.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2922639 A1
- DE 19516834 A1
- EP 0163922 B1

- DE 19625285 A1
- DE 19511882 B4
- DE 3422354 A1